(19) **Europäisches Patentamt**

**European Patent Office**

**Office européen des brevets**

(11) **EP 0 637 324 B1**

(12) **EUROPEAN PATENT SPECIFICATION**

(45) Date of publication and mention
of the grant of the patent:
**28.06.2000 Bulletin 2000/26**

(51) Int. Cl.$^7$: **C08G 59/18**, C08G 59/50

(21) Application number: **93908957.9**

(86) International application number:
**PCT/EP93/00957**

(22) Date of filing: **15.04.1993**

(87) International publication number:
**WO 93/21250 (28.10.1993 Gazette 1993/26)**

(54) **AQUEOUS HARDENERS FOR EPOXY RESIN SYSTEMS**

WÄSSRIGE HÄRTUNGSMITTEL FÜR EPOXIDHARZSYSTEME

DURCISSEURS AQUEUX DESTINES A DES SYSTEMES DE RESINE EPOXY

(84) Designated Contracting States:
**AT BE CH DE DK ES FR GB GR IE IT LI LU NL PT SE**

(30) Priority: **21.04.1992 EP 92201096**

(43) Date of publication of application:
**08.02.1995 Bulletin 1995/06**

(73) Proprietor:
**AIR PRODUCTS AND CHEMICALS, INC.
Allentown, PA 18195-1501 (US)**

(72) Inventor: **KLIPPSTEIN, Achim
D-52351 Düren (DE)**

(74) Representative: **Kador & Partner
Corneliusstrasse 15
80469 München (DE)**

(56) References cited:
**EP-A- 0 103 908**       **US-A- 4 022 946**

• **PATENT ABSTRACTS OF JAPAN vol. 7, no. 97 (C-163)(1242) 23 April 1983**

**Description**

The invention relates to aqueous hardeners in the form of aqueous emulsions of active amino groups-displaying epoxy resin adducts, such as polyamide-amine epoxide adducts or polyamine epoxide adducts and the like, their preparation, and the use of same in curing epoxy resin systems.

Epoxy resins have long been known; it is a question, in that case, of condensation products of epoxide compounds and polyvalent alcohols or phenols which on account of their comparatively low molecular weight still require curing. To this end use is made of compounds capable of cross-linking the epoxy resin, i.e., which have at least two active points in the molecule. Particular mention is to be made here of compounds having two or more active hydrogen atoms such as polyamines and corresponding polyamide-amines, as well as dicarboxylic acids, cyclic dicarboxylic anhydrides, and the like.

Such hardeners have been described in numerous patent specifications and technical literature articles and are commercially available in the market.

Also known are hardeners which are obtained by the adduction of epoxides or epoxy resins to corresponding substances having active hydrogen atoms and which as adducts, moreover, have sufficiently active amino groups to make the curing of epoxy resins into the end product possible.

Such adduct hardeners are described in, int. al., German Published Application 2 361 671. These hardeners are obtained by reacting an excess of polyamide-amine or polyamine with an epoxy resin. For the curing process these adducts are either first of all dissolved as such in water and mixed with a solution or dispersion of another polymer and then added to the epoxide to be cured, or mixed directly with the dissolved or dispersed further polymer without previous dissolving. Besides other shortcomings such as long drying times and insufficient chemical resistance, an essential drawback to this process in many cases is the fact that in addition to the hardener and the epoxy resin to be hardened there must always be a third polymer component which, furthermore, is not reactive.

In European Patent Application 605 similar adduct hardeners are described, which are composed of three elements, viz, a polyepoxide compound, a polyalkenyl polyether polyol, and a polyamine. This conversion product preferably is further reacted with a mono-unsaturated compound, the adduct may be diluted with water beforehand.

Another hardener for epoxide compounds is described in European Patent Application 387 418. In this case polyalkylene polyether monoamines or polyalkylene polyether diamines or polyalkylene polyether polyamines are reacted with corresponding epoxide compounds. Following a further reaction with amines this intermediate product may be dispersed or dissolved in water and then applied as an emulsion, suspension, or solution.

Aqueous emulsions of hardeners based on adducts of epoxides and amine compounds are also described in laid-open Japanese Patent Application 58-23823. The amine compounds in question are water-insoluble or poorly water-soluble compounds, e.g. long-chain alkylamines or modified ethylene diamine.

Although a wide range of hardeners for curing epoxy resin systems, especially aqueous epoxy resin systems, is already known, there is still need for improved hardeners of this kind, as well as for processes to prepare them.

It is therefore the object of the invention to provide aqueous hardeners for curing epoxy resin systems, more particularly aqueous systems, which stand out for low toxicity, favourable curing behaviour, also at low temperatures, reduced drying times when applying the hardener/epoxy resin systems, and other advantages.

According to the present invention a process for the preparation of an aqueous emulsion of an active amino group containing epoxide adduct hardener for curing epoxy resin systems is characterised by converting an aqueous solution of an active amino-group-containing hardener, which can emulsify the epoxy resin used for adduct formation to an adduct emulsion by mixing with an epoxy resin having an epoxy functionality of 1,2 - 3,5 and a weight average molecular weight of at least 700, the epoxy resin in liquid form being mixed with said solution so as to be emulsified thereby as an adduct having an increased amine-H-equivalent weight.

The mixing and conversion are advantageously carried out with vigorous stirring. Dissolved hardeners having an amine-H-equivalent weight of 50 to 250 may be employed, and the amine-H-equivalent weight may be raised by 10 to 250. The emulsion is usually set at a viscosity of 5 to 40 Pa.s, measured on a 50%-emulsion at 20 C, and the epoxy resin added to the hardener solution over a period of 5 to 20 minutes.

The hardener may be an amine adduct, a polyamine adduct, and aliphatic polyamine, a polyoxyalkylenediamine, a polyamidoamine, a Mannich base formed by the condensation of a phenol, an amine and formaldehyde, and/or a transaminated Mannich base, preferably an amine adduct, and the epoxy resin is preferably a diglycidyl ether resin of bisphenol A.

Water and optionally-present other volatile constituents may be extracted wholly or in part from the aqueous emulsions prior to their use in the curing of epoxy resins, more particularly for storage and transport purposes, and if so desired may be added again wholly, in part, or in an increased amount at a later time. The aqueous emulsions can be subjected to spray drying. Emulsions produced according to the process may be used, together with epoxy resins, as additives for hydraulic binders such as cement.

To carry out the process according to the invention use is made of active amino groups-displaying hardeners for epoxy resin systems, for instance commercially available products. These must be available as an aqueous solution, i.e., the actual hardener forms a real or colloidal solution with water. These solutions may be prepared by simple dissolving in water. Frequently, such solutions also are already commercially available as such. These genuine solutions appear to the naked as well as to the aided eye (under the microscope) to be completely clear. This is frequently the case up to a particle size of about 0,001 µm. Corresponding colloidal solutions having a particle size of up to about 1 µm also appear to be homogeneous still, but they display the so-called Tyndall effect. These solutions distinguish themselves from coarsely dispersed systems.

It goes without saying that the particle size data given above should serve solely as a guiding principle and that the boundaries between the three ranges may be fluid and differ from hardener to hardener.

The aqueous solution of the hardener may contain further additives, e.g. emulsifiers, which serve to emulsify the epoxy resin to be cured, acids, cosolvents, and other conventional additives.

Within the framework of the invention use may also be made of hardeners which are water-insoluble per se and will form only coarsely dispersed systems, viz, suspensions or emulsions, with water as such, provided that they can be brought to solution by the addition of other substances, for instance an acid, more particularly an organic acid, or other means.

Highly suitable for use are hardeners known as polyamide-amines, especially condensation products based on polyamines such as diethylene triamine and monomers, dimerised and trimerised fatty acids or derivatives thereof, e.g. the polycondensation product of dimerised soybean fatty acid methyl ester and diethylene triamine.

Also highly suitable are products on the basis of phenols, formaldehyde, amines which are prepared in accordance with a Mannich condensation process. For the preparation of such condensation products reference is made to, int. al., DE-AS 1 162 076, according to which polyvalent aliphatic amines, mono- or polyvalent phenols, and aldehydes are reacted with each other.

The transamination of these and other Mannich bases is described in EP-PS 3 479, in which a wide range of other hardeners is also enumerated. The disclosure in this patent specification is explicitly referred to. Within the framework of the invention it is especially advantageous to use solutions of transaminated Mannich bases as hardener.

As examples of commercially available hardeners that may be used as solution within the framework of the invention are to be mentioned: Epilink 360, Epilink 375, Epilink 660 (trade name of Akzo Chemicals GmbH, Düren), Euredur XE-38 (trade name of Schering AG, Berlin), Beckopox EH623 (trade name of Hoechst AG, Frankfurt am Main), Jeffamine (trade name of Texaco Chemical Comp., Houston, Texas, USA), provided that they have mare than one active amino group per molecule.

To carry out the process according to the invention use is made of conventional reactive amino groups-displaying hardeners, which frequently are already commercially available as aqueous solution and may further be diluted with water if so desired. If the hardeners are not yet available in solution, they are converted to an aqueous solution, optionally with the addition of solution promoting means, e.g. an organic acid. The concentration of the hardeners in the aqueous solution may vary within comparatively wide limits, e.g. from 10 to 80 wt.%; it is expedient, however, to adapt the concentration to its later use already when preparing the emulsion. For many applications it is advantageous to so set the concentration that after conversion to an emulsion by addition of the permitted epoxy resin, an aqueous hardener system with about 50 wt.% of dry substance, i.e. anhydrous material, is formed.

After that, epoxy resin which has a functionality of 1,2 to 3,5 is added, with care being taken to obtain proper mixing. The epoxy resin is conveniently added in the liquid form, either because, say, it is liquid to start with, or because it is dispersed in water. The amount of epoxy resin is so adjusted that after the addition an emulsion is available, and the adduct has the number of active amino groups required for the later curing process. The addition of the epoxide is best carried out batchwise or continuously over a set period of time, e.g. within 5 to 20 minutes, after which the temperature may be increased, e.g. to 80°C, and after-stirring may take place for some time. Alternatively, the temperature may be raised prior to the epoxide being added.

Care should be taken to see to it that the addition of the epoxide proceeds in such a way that the epoxide is not dissolved but emulsified by the available hardener solution. For, if on account of, say, too slow epoxide adding a solution is formed first, there is a grave risk of adducts with unserviceably high viscosities being formed.

After that, the emulsion is cooled and either used directly for curing or packed or stored. Alternatively, it is possible to first wholly or partially remove the water from the emulsion, especially by means of spray drying, and this is also the case for optionally present other substances such as volatile cosolvents and the like, and to use the concentrated or dehydrated product at a later time, optionally after the addition of water and other additives.

It is of importance for the hardener solution used to form an aqueous emulsion with the added epoxy resin, there should be no gelling. To this end, advantageous use is made of epoxy resins having an average molecular weight (weight average) of at least 700.

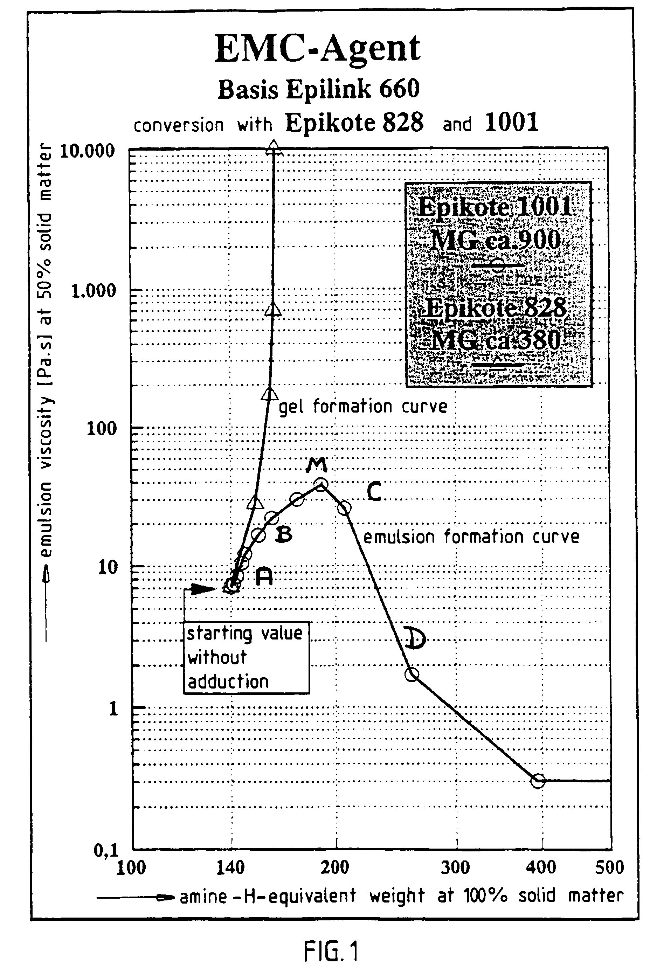

Surprisingly, it was found that the process according to the invention may lead to aqueous hardener emulsions which, depending on the amount of epoxy resin employed, display a special viscosity profile. For if according to the invention, starting from a hardener solution, an adduct emulsion is prepared by reaction with a corresponding epoxy resin, e.g. a 50%-emulsion, then depending on the amount of epoxy resin added, i.e., depending also on the increase in molecular weight or the increase in amine-H-equivalent weight, the viscosity values of such 50%-emulsions are always at one point in a typical curve, as is depicted in Figure 1. Thus, depending on the adducted amount of epoxy resin, the low viscosity of the solution first rises but still remains within a very low viscosity range, and then, after reaching a maximum (M), which likewise is in a range of low viscosities, preferably below 50 mPa, falls again. This type of curve is defined within the framework of the invention as an emulsion viscosity curve with a rising and falling viscosity profile. The preparation of such emulsions is preferred within the framework of the invention. With the aid of the viscosity profile it is possible to select suitable systems by means of a few routine tests. Preferably, the emulsions prepared according to the invention have viscosities which are on the curve path ABMCD of the viscosity profile. In such a case, point A corresponds to a viscosity for an emulsion where the amine-H-equivalent weight of the presented hardness was increased by 10; B is a random point between A and the maximum M, C is a random point between M and D, D is the value from which the fall in viscosity is reduced again as the amine-H-equivalent weight increases, i.e., at which the curve starts to flatten out.

Such a curve is set up as follows. An aqueous solution of the hardener to be used is made available and to it is added an amount of epoxide which is sufficient, int. al., to increase the amine-H-equivalent weight by about 10. In the same way, again always making use of a corresponding hardener solution, emulsions of a higher HEW are prepared, and each time the viscosity of the emulsion obtained in adduct forming is determined.

Within the framework of the invention the amine-H-equivalent weight means the equivalent weight calculated on active hydrogen-displaying amino groups. Unless indicated otherwise, it is a question of the equivalent weight calculated on dry substance. The value sometimes calculated on the supply form (aqueous solution, for instance) by suppliers can easily be converted on the basis of the concentration specifications.

The aqueous hardener emulsions according to the invention can be used directly for curing epoxy resins. The epoxy resins to be cured may be utilised in, say, the liquid form without solvent or dispersing liquid. Especially advantageously, however, use is made of aqueous dispersions of epoxy resins, either as suspension or as emulsion.

For the forming of adducts on the one hand and the later curing on the other the same epoxy resins may be selected; alternatively, different epoxy resins may be selected for forming the adduct and emulsion, and for curing. These epoxy resins are known in themselves. Quite generally, it is a question of compounds which have more than one epoxide function in the molecule. Mostly, they are prepared by reaction of an epihalohydrin such as epichlorohydrin with a polyfunctional compound such as diphenols, e.g. bisphenol-A, aliphatic diols, etc. An enumeration of such compounds is to be found, int. al., in already cited documents such as EP-OS 387 418, JP-OS 83/23823, EP-OS 605.

The emulsions according to the invention offer a whole range of in part wholly unexpected advantages. Thus, the substantially reduced drying times would not have been expected. The required strengths and chemical resistance are set more rapidly and have been enhanced. On account of their outstanding properties, the hardeners are excellently processable with virtually all epoxy resins. Since they are comparatively unsusceptible to variations of the formula and changes in the processing conditions, they allow for secure and reproducible working.

They are highly suitable for the preparation of high-solid systems. The hardeners according to the invention can be employed in all conventional areas which require the curing or cross-linking of epoxy resins, i.e., for instance, for the preparation of coating compositions, coatings, coverings, sealants and adhesives, for the preparation of flexible shaped articles, flat shaped articles, and laminates.

The hardeners according to the invention may be employed with particular advantage together with epoxy resins as additive for hydraulic binders such as cement.

The conventional hardeners as a rule also contain so-called free amines, by which are meant low-molecular weight amines such as ethylene diamine, diethylene triamine, and so on, which in part may still arise from the preparation of the polyamide-amine, but in part may also be deliberately added in order to accelerate the curing process. These amines are mostly toxic, corrosive substances, as a result of which such hardeners are subject to special compulsory identification.

The hardeners according to the invention do not require such additives as they react sufficiently quickly of their own accord, so they are very environment-friendly. Since it is possible according to the invention to reduce the free amine content to below 1%, compulsory identification frequently does not apply.

The invention will be further illustrated with reference the following examples.

Preparation specification (corresponds to Example 8 in the table)

Into a 1 l glass flask were charged 423 g of epoxide hardener Epilink 660 and diluted, with stirring, with 205 g of completely softened water. To this hardener solution 72 g of epoxy resin solution Epikote 1001 PM 75 were then continuously added dropwise over 5 minutes at a temperature of 50°C. The rate of stirring was set such that vigorous mixing resulted, without air being stirred in.

After the addition the temperature was raised steadily from 50° to 80°C over 30 minutes. This temperature was maintained for an after-stirring period of 60 minutes. The resulting emulsion was cooled to 30°C with stirring and drawn off.

The thus prepared emulsion had a viscosity of 25 Pa.s (20°C) with a solids content of 50% and a natural colour of pale yellow. The amine-H-equivalent weight was 175. So the following change was made: the amine-H-equivalent weight of Epilink 660, which is 140 at 100% dry substance, in Example 8 was 175 at 100% dry substance, hence it was increased by 35 units or 25%, calculated on the dry substance.

The test applying the technique showed a very marked improvement of some properties as compared with unmodified Epilink 660. As reaction component for the hardener of the example and Epilink 660 a liquid epoxy resin (Eurepox 776 of Schering AG) was used. After the resin and the hardener component had been mixed, a 50% overall substance was set using water. All tests were carried out in a normal climate of 20°C and 65% humidity.

| Table/Results | | | | |
|---|---|---|---|---|
| according to the invention | | equivalent weight | | |
| hardener (no. 8) | | =175 | 48,0g | -- |
| Epilink 660 | | =140 | -- | 30,3 |
| Eurepox 776 | | =190 | 26,0g | 28,8 |
| completely softened water | | % | 26,0g | 40,9 |
| | | | 100,0g | 100,0 |
| solids content | | | 50% | 50% |
| processing time (hours) | | | 2 | 2 |
| drying time (hours) | | | 5 | 12 |
| phase 4 BK recorder | | | | |
| impact hardness (Persoz) | | | | |
| age of samples | 24 hours | | 175 | 95 |
| | 48 hours | | 270 | 180 |
| | 7 days | | 350 | 310 |
| | 1 month | | 380 | 370 |
| resistance to acetone | | | | |
| reached after .... days | | | 2 | 7 |

In the same way adducts were prepared according to the specifications in the table. It is obvious that in the case of systems which do not form emulsions the viscosity rises very sharply and gelling occurs very quickly. With the exception of Example 1, the amounts were so calculated as to give a 50 wt.% emulsion.

Table

| raw material | Type | Techn. data[5] Solid matter | equivalent weight | Supplier | Examples of emulsion forming ... ... | | | | | | |
|---|---|---|---|---|---|---|---|---|---|---|---|
| | | | | | 0 | 1 | 2 | 3 | 4 | 5 | 6 |
| Jeffamine D230 | EP-Hardener | 100 | 60 | Texaco | 17,9 | | | | | | |
| EPILINK 360[1] | " | 50 | 210 | Akzo | | 38,0 | | | | | |
| EPILINK 375[1] | " | 60 | 230 | " | | | 63,0 | | | | |
| EPILINK 660[1] | " | 70 | 200 | " | | | | | | 60,1 | 60,1 |
| Euredur XE 38[1] | " | 80 | 200 | Scherin | | | | 41,6 | | | |
| Beckopox EH 623[1] | " | 80 | 150 | Hoechst | | | | | 52,0 | | |
| Beckopox EP-384[2] | EP-resin | 53 | 1.000 | Hoechst | 61,1 | 12,0 | 23,5 | 31,2 | 14,0 | 15,0 | |
| Epi-Res WY 5522[2] | " | 53 | 1.200 | Hitek | | | | | | | 14,4 |
| Water | Diluent | | | | 22,0 | 50 | 13,5 | 26,2 | 32,3 | 24,9 | 25,5 |
| Disponil 23 | emulsifier | | | Henkel | 0,6 | | | 1,0 | | | |
| Boric acid | | | | Merck | | | | | 1,7 | | |

| techn.data of the reaction products | | | Solid matter | % | 50 | 25 | 50 | 50 | 50 | 50 | 50 |
|---|---|---|---|---|---|---|---|---|---|---|---|
| | | | viscosity | Pa.s 20°C | 0,5 | >300 | 220 | 8 | 100 | 25 | 20 |

| amine-H-equivalent calculated on 100% solid matter | | of starting hardener | 60 | 105 | 138 | 120 | 160 | 140 | 140 |
|---|---|---|---|---|---|---|---|---|---|
| | | reaction product | 200 | 150 | 200 | 200 | 200 | 175 | 175 |
| | | increase in HEW by % | 234 | 43 | 45 | 67 | 25 | 25 | 25 |

1 optically clear solutions in water  
2 aqueous emulsions  
3 epxoy resin solution in Dowanol PM  

4 100%-liquid epoxy resin  
5 calculated on the supply form

Table

| raw material | Type | Techn. data[5] Solid matter | equivalent weight | Supplier | ... | ... | Examples of no emulsion forming | | | | |
|---|---|---|---|---|---|---|---|---|---|---|---|
| | | | | | 7 | 8 | 9 | 10 | 11 | 12 | |
| EPILINK 660[1] | EP-Hardener | 70 | 200 | Akzo | 60,1 | 60,4 | 69,2 | 66,3 | 65,8 | 65,2 | |
| DOW XZ 92400.00[3] | EP-resin | 85 | 425 | Dow | | | | | | | |
| Epikote 1001 PM 75[3] | " | 75 | 600 | Shell | | 10,3 | | | | | |
| Epikote 828[4] | " | 100 | 190 | Shell | | | 2,3 | 3,6 | 3,9 | 4,4 | |
| Water | Diluent | | | | 30,4 | 29,3 | 29,5 | 30,1 | 30,3 | 30,4 | |

| | | | 7 | 8 | 9 | 10 | 11 | 12 |
|---|---|---|---|---|---|---|---|---|
| Techn.data of the reaction products | Solid matter | % | 50 | 50 | 50 | 50 | 50 | 50 |
| | viscosity | Pa.s 20°C | >300 | 23 | 28 | 170 | 700 | gelled |
| amine-H-equivalent calculated on 100% solid matter | of starting hardener | | 140 | 140 | 140 | 140 | 140 | 140 |
| | reaction product | | 175 | 175 | 152 | 160 | 162 | 163 |
| | increase in HEW by % | | 25 | 25 | 8,6 | 14,3 | 15,7 | 16,4 |

1 optically clear solutions in water
2 aqueous emulsions
3 epxoy resin solution in Dowanol PM

4 100%-liquid epoxy resin
5 calculated on the supply form

EP 0 637 324 B1

## Claims

1. A process for the preparation of an aqueous emulsion of an active amino group-containing epoxide adduct hardener for curing epoxy resin systems, characterised by converting an aqueous solution of an active amino-group-containing hardener, which can emulsify the epoxy resin used for adduct formation, to an adduct emulsion by mixing with an epoxy resin having an epoxy functionality of 1,2 - 3,5 and a weight average molecular weight of at least 700, the epoxy resin in liquid form being mixed with said solution so as to be emulsified thereby as an adduct having an increased amino-H-equivalent weight.

2. A process according to claim 1 characterised in that the mixing and conversion are carried out with vigorous stirring.

3. A process according to claims 1 or claim 2 characterised in that dissolved hardeners having an amine-H-equivalent weight of 50 to 250 are employed.

4. A process according to any one of claims 1-3, characterised in that the amine-H-equivalent weight is raised by 10 to 250.

5. A process according to any one of claims 1-4, characterised in that the emulsion is set at a viscosity of 5 to 40 Pa.s, measured on a 50%-emulsion at 20°C.

6. A process according to any one of claims 1-5, characterised in that the epoxy resin is added to the hardener solution over a period of 5 to 20 minutes.

7. A process according to claim 6, characterised in that the hardener is an amine adduct, a polyamine adduct, an aliphatic polyamine, a polyoxyalkylene diamine, a polyamidoamine, a Mannich base formed by the condensation of a phenol, an amine and formaldehyde, and/or a transaminated Mannich base.

8. A process according to claim 7 wherein the hardener is an amine adduct and the epoxy resin is a diglycidyl ether resin of bisphenol A.

9. A process according to any one of claims 1-8, characterised in that water and optionally present other volatile constituents may be extracted wholly or in part from the aqueous emulsions prior to their use in the curing of epoxy resins, more particularly for storage and transport purposes, and that if so desired, water and optionally the volatile constituents may be added again wholly, in part, or in an increased amount at a later time

10. A process according to claim 9, characterised in that the aqueous emulsions are subjected to spray drying.

11. Application of emulsions Produced according to any preceding claim together with epoxy resins as additive for hydraulic binders such as cement.

## Patentansprüche

1. Verfahren zur Herstellung einer wäßrigen Emulsion eines Härters aus einem aktive Aminogruppen enthaltendem Epoxid-Addukt zum Härten von Epoxyharzsystemen, gekennzeichnet durch Umwandlung einer wäßrigen Lösung eines aktive Aminogruppen enthaltenden Härters, die das für die Adduktbildung verwendete Epoxyharz emulgieren können, in eine Adduktemulsion durch Mischen mit einem Epoxyharz mit einer Epoxyfunktionalität von 1,2 bis 3,5 und einem Gewichtsmittel des Molekulargewichts von mindestens 700, wobei das Epoxyharz in flüssiger Form mit der Lösung gemischt wird, so daß es dadurch als ein Addukt emulgiert wird, das ein höheres Amin-H-Äquivalentgewicht hat.

2. Verfahren nach Anspruch 1, dadurch gekennzeichnet, daß das Mischen und Umwandeln unter kräftigem Rühren erfolgt.

3. Verfahren nach Anspruch 1 oder Anspruch 2, dadurch gekennzeichnet, daß gelöste Härter mit einem Amin-H-Äquivalentgewicht von 50 bis 250 verwendet werden.

4. Verfahren nach einem der Ansprüche 1 bis 3, dadurch gekennzeichnet, daß das Amin-H-Äquivalentgewicht um 10 bis 250 zunimmt.

**5.** Verfahren nach einem der Ansprüche 1 bis 4, dadurch gekennzeichnet, daß die Viskosität der Emulsion bei 5 bis 40 Pa • s, gemessen bei einer 50%igen Emulsion bei 20°C, eingestellt wird.

**6.** Verfahren nach einem der Ansprüche 1 bis 5, dadurch gekennzeichnet, daß das Epoxyharz der Härterlösung innerhalb eines Zeitraums von 5 bis 20 Minuten zugesetzt wird.

**7.** Verfahren nach Anspruch 6, dadurch gekennzeichnet, daß der Härter ein Amin-Addukt, ein Polyamin-Addukt, ein aliphatisches Polyamin, ein Polyoxyalkylendiamin, ein Polyamidoamin, eine Mannich-Base, die durch Kondensation von einem Phenol, einem Amin und Formaldehyd erzeugt wurde, und/oder eine transaminierte Mannich-Base ist.

**8.** Verfahren nach Anspruch 7, wobei der Härter ein Amin-Addukt ist und das Epoxyharz ein Diglycidyletherharz von Bisphenol A ist.

**9.** Verfahren nach einem der Ansprüche 1 bis 8, dadurch gekennzeichnet, daß vor der Verwendung beim Härten von Epoxyharzen, insbesondere für Lagerungs- und Transportzwecke, Wasser und wahlfrei vorhandene andere flüchtige Bestandteile vollständig oder teilweise aus den wäßrigen Emulsionen extrahiert werden können, und daß Wasser und wahlfrei die flüchtigen Bestandteile, falls dies notwendig ist, später wieder vollständig, teilweise oder in einer größeren Menge zugesetzt werden.

**10.** Verfahren nach Anspruch 9, dadurch gekennzeichnet, daß die wäßrigen Emulsionen dem Sprühtrocknen unterzogen werden.

**11.** Verwendung von Emulsionen, die nach einem der vorstehenden Ansprüche hergestellt wurden, zusammen mit Epoxyharzen als Additiv für wasserbindende Mittel, wie Zement.

**Revendications**

**1.** Procédé pour la préparation d'un émulsion aqueuse d'un groupe amino actif contenant un agent durcisseur d'adduit époxyde pour durcir les systèmes de résine époxy, caractérisé en ce que l'on convertit une solution aqueuse d'un groupe amino actif contenant un agent durcisseur qui peut émulsionner la résine époxy utilisée pour la formation du produit d'addition, en une émulsion de produit d'addition par mélange avec une résine époxy ayant une fonctionnalité époxy d'1,2 -3,5 et un poids moléculaire d'au moins 700, la résine époxy dans une forme liquide étant mélangée avec la solution de façon à être émulsionnée sous forme d'adduit ayant un poids équivalent amine-H accru.

**2.** Procédé selon la revendication 1, caractérisé en ce que le mélange et la conversion sont exécutés sous agitation vigoureuse.

**3.** Procédé selon la revendication 2, caractérisé en ce que l'on utilise des agents durcisseurs dissous ayant un poids équivalent amine-H de 50 à 250.

**4.** Procédé selon l'une quelconque des revendications 1-3, caractérisé en ce que le poids équivalent amine-H est porté de 10 à 250.

**5.** Procédé selon l'une quelconque des revendications 1-4, caractérisé en ce que l'émulsion est fixée à une viscosité de 5 à 40 Pa.s, mesurée sur une émulsion à 50% à 20°C.

**6.** Procédé selon l'une quelconque des revendications 1-5, caractérisé en ce que la résine époxy est ajoutée à la solution pendant une période de 5 à 20 minutes.

**7.** Procédé selon la revendication 6, caractérisé en ce que l'agent durcisseur est un adduit amine, un adduit polyamine, une polyamine aliphatique, une polyoxyalkylènearamine, une polyamidoamine, une base de Mannich formée par condensation d'un phénol, une amine et formaldéhyde et/ou une base Mannich transaminée.

**8.** Procédé selon la revendication 7, dans lequel l'agent durcisseur est un adduit amine et la résine époxy est une résine diglycidyléther de bisphénol A.

9. Procédé selon l'une quelconque des revendications 1 à 8, caractérisé en ce que l'eau et facultativement d'autres constituants volatiles présents peuvent être extraits totalement ou en partie des émulsions aqueuses avant leur utilisation dans le durcissement des résines époxy, notamment à des fins de stockage et de transport et si on le souhaite, on pourra ajouter à nouveau totalement partiellement ou en quantité accrue à une date ultérieure de l'eau et facultativement les constituants volatiles.

10. Procédé selon la revendication 9, caractérisé en ce que les émulsions aqueuses sont soumises à un séchage par pulvérisation.

11. Application des émulsions produites selon l'une quelconque des revendications précédentes conjointement avec les résines époxy sous forme d'additif pour des liants hydrauliques tels que du ciment.

FIG. 1